(19) Europäisches Patentamt
European Patent Office
Office européen des brevets

(11) **EP 2 131 484 A1**

(12) **EUROPEAN PATENT APPLICATION**

(43) Date of publication:
**09.12.2009 Bulletin 2009/50**

(51) Int Cl.:
*H02P 6/00* (2006.01)   *H01L 21/677* (2006.01)
*H02K 41/02* (2006.01)   *H02K 41/03* (2006.01)

(21) Application number: **09005456.0**

(22) Date of filing: **17.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **06.06.2008 EP 08010326**

(71) Applicant: **Robert Bosch GmbH
70184 Stuttgart (DE)**

(72) Inventors:
• **Jansen, Jacob, Willem
5583 GP, Waalre (NL)**

• **Rovers, Johannes, Marinus, Maria
5616 BP, Eindhoven (NL)**
• **Van Lierop, Cornelis, Martinus, Maria
5583 BL, Waalre (NL)**
• **Lomonova, Elena, Andreevna
5627 NL, Eindhoven (NL)**

(74) Representative: **Thürer, Andreas
Bosch Rexroth AG
BR/IPR
Zum Eisengiesser 1
D-97816 Lohr am Main (DE)**

(54) **Reduction of force ripple in a permanent magnet linear synchronous motor**

(57)    A method for reducing force variations in a permanent magnet synchronous linear motor (100) comprising at least one stator (110), at least one translator (121, 122), and at least one coil, wherein at least one current of at least one coil is changed during movement of the at least one translator (121, 122), is proposed, in which in at least one position of the at least one translator (121, 122) at least one current of at least one coil is provided on the basis of an electromotive force.

Fig. 4

## Description

Field of the invention

This invention relates to a method for reducing force ripple in a permanent magnet linear synchronous motor, especially with a segmented stator, and includes a corresponding method, a corresponding device, a corresponding use, a corresponding computer program and a corresponding computer program product.

Prior Art

Permanent magnet linear synchronous motors (PMLSMs) are used in applications requiring high speed and high positioning precision such as semiconductor and electronic manufacturing or laser cutting systems. PMLSMs exhibit significantly better performance and higher thrust density than linear induction motors. The main benefits of PMLSMs are high force density and the high positioning precision and accuracy associated with the relative mechanical simplicity of such systems. In PMLSMs, the electromagnetic force is applied directly to the payload without any mechanical transmission such as chains or screw couplings. Today's state-of-the-art linear motors can achieve velocities up to 10 m/s and accelerations of 25 g.

NL 1024992 discloses a linear motion system which comprises an apparatus for moving carriers in a circulating transport circuit using magnetic movement devices, which comprise magnetic units working together and controllable coil units. Such an apparatus is often used in automated and specific product facilities, where a product is placed on the product carrier. During the circulation through the transport circuit, the product has to undergo several similar process steps. An application of such an apparatus relates to a semiconductor substrate placed on a product carrier, where various ultra-thin layers are to be deposited (e.g. chemical or physical vapour deposition CVD/PVD).

In such an application field, precise control of the movement of the various product carriers through the circulating transport circuit is essential for the correct performance of the various process steps on the products placed on the product carriers. Magnetic movement devices are used to move the product carriers through the transport circuit, particularly where very high requirements are set for the accuracy of the various process actions, such as the placement of an electronic component or the deposition of a semiconductor layer on a substrate.

The movement occurs without contact and without detrimental influences that may disturb the movement of the product carriers through the transport circuit, with the possibility to manipulate different product carriers independently of each other.

In contrast to conventional, rotational motors, where typically a central anchor rotates in respect to circumferentially arranged permanent magnets, PMLSMs, however, are inherently subject to effects caused by the linear arrangement of the corresponding elements, influencing the movement of motile parts (translators).

A translator in a PMLSM is exposed to several forces acting on it. Thrust force, $F_k$, is the force generated due to the currents in the coils. Reluctance force, $F_r$, results from a change in inductance of the coils due to the presence of the back iron in their counterparts. A cogging force component results from magnetic interactions between the magnets and the iron cores. It is known in the art to slightly skew the magnets to decrease cogging force.

The most prominent nonlinear effects in a PLMSM arise from nonlinear thrust force (force ripple) and cogging force, especially the former being caused by imperfections in the underlying components. The force ripple effect becomes even more prominent in a corresponding motor with segmented elements, as explained later in more detail. Reluctance force typically has a value of only about 1% of the thrust force and will therefore not be discussed in more detail herein. It is, however, considered possible to use the current invention together with measures that are suitable to reduce reluctance force, if considered expedient.

Force ripple is an electromagnetic effect and causes a periodic variation of the force constant. Only if the counter-electromotive force (back-EMF) waveforms are sinusoidal and balanced, as explained in more detail below, any symmetric sinusoidal commutation of the phase currents will result in a sufficiently smoothed force. Cogging force, as opposed to force ripple, is a disturbance force that is independent of the motor currents.

In traditional moving-coil PMLSMs the moving part (the translator) is the armature and the stator part consists of permanent magnets (PMs). This "moving-coil" design entails the moving part being connected by cables to the power supply to energize the coils, which introduces a cable slab and limits the length of the stroke. This may be considered disadvantageous and a drawback when the machine is used as a transportation system, especially for achieving delicate positioning requirements where the cables might hinder proper movement. When the structure of a moving-coil motor is inverted, the magnet plate becomes the moving part, and therefore does usually not require any wired connection. The track then consists of a (optionally) segmented stator structure, i.e. it comprises several stator segments spaced at a certain distance from one another. While it is possible to reduce force discontinuities by optimizing the geometrical arrangement of respective coil stators, this may not be possible and/or practical in some situations. Furthermore, the level of reduction by geometric optimization is often not satisfactory.

The advantages of such a segmented stator arrangement are the smaller number of coils and of corresponding power amplifiers that may be reduced in comparison to a device where the track is a continuous array of coils. The main disadvantage is that the translator switches between subsequent stators as it moves over motor track, which results in a more pronounced ripple which needs to be compensated for than in a non-segmented stator motor. Any thrust force discontinuities that are present in an unsegmented stator motor, and which to some extent may be compensated for by constructive measures, will exist to a significantly larger extent in a segmented stator motor.

In the following, the invention will be exemplified with a segmented stator with coils. It is, however, considered equally useful to reduce thrust force discontinuities in a motor comprising a stator with a segmented permanent magnet array or in traditional moving-coil PMLSMs.

Moving-magnet linear synchronous motors with segmented-stators are known, however, these do not offer force ripple reduction. For moving-coil machines, force ripple reduction may be performed by control means and/ or by design means. Force ripple reduction for moving-magnet machines is also known. However, thrust force ripple due to the segmented stator structure was not considered previously.

Known prior art commutation algorithms for PMLSMs are based on standard dq0 decomposition which may be described as a method based on transformation into the dq frame. Using dq0 transformation, the armature quantities are split into two orthogonal components, namely the direct axis (d axis) and the quadrature axis (q axis) components. dq0 decomposition ultimately results in a position independent expression for the thrust force, $F_k$, where

$$F_k = \frac{3}{2}\hat{k}i_q,$$

with $\hat{k}$ the amplitude of the force function and iq the current in the q axis. Thus, the total thrust force is given by a multiplication of a constant with the current in the q axis. However, these calculations are only valid in a balanced system. During operation of a segmented stator PMLSM, however, the motor is in a state where it does not represent a balanced three-phase system when the translator does not fully overlap a stator segment. This inherently results in significant force ripple (that may be characterized as edge-effect-discontinuities caused by both the non continuous stator and the translator) which, by constructive measures, can only be minimized by optimizing the distance between subsequent stator segments.

In view of the above, a need for reducing thrust force discontinuities in a permanent magnet linear synchronous motor with a segmented stator exists.

It is an object of the invention to provide a method for reducing force discontinuities in a permanent magnet linear synchronous motor with a segmented stator which overcomes the disadvantages of the prior art and allows for a smooth, precise, and user friendly operation of a corresponding device with minimal constructive effort and expense.

Advantages of the invention

According to the invention, a method for reducing force ripple in a permanent magnet linear synchronous motor, especially with a segmented stator, a corresponding device, a corresponding use, a corresponding computer program and a corresponding computer program product is provided. Advantageous embodiments are defined in the dependent claims.

According to the invention, in a method for reducing force variations in a permanent magnet synchronous linear motor comprising at least one stator, at least one translator, and at least one coil, wherein at least one current of at least one coil is adjusted during movement of the at least one translator, in at least one position of the at least one translator at least one current of at least one coil is provided on the basis of an electromotive force. By using this method together with a corresponding commutation algorithm, force ripple can be minimized and the thrust force may be smoothed to advantageously allow a better control of the movement of a corresponding motor. As further detailed below, by using an electromotive force dependent current commutation, a significantly smoother force acting on the translator may be achieved. Especially industrial applications requiring high precision in positioning and movement may therefore advantageously profit from the method of the invention.

In the following, "current" shall describe the total of all phases supplied to a corresponding coil. Typically, a current according to this definition will comprise three phases, but is not limited to this specific number.

Advantageously, the electromotive force is either measured or calculated, especially by a finite element method. Hereby, a corresponding commutation may be performed rapidly and reliably based on an actual electromotive force, from which individual current components may be calculated.

It may be considered advantageous that at least in one further position of the at least one translator at least one further current is provided on the basis of a dq0 algorithm. A corresponding algorithm can be advantageously applied in situations where the system of interest is in a state of balance, i.e. in a situation where the dq0 commutation is valid. In this way, control effort may be minimized by using conventionally known instrumentalities that may be implemented easily and in a cost-effective way and contribute to reducing the overall expenses.

Typically, at least one current may comprise three phases, at least one phase being changed while the position of at least one translator changes. When changing only one phase of the three-phase current supplied by a conventional power supply (with the sum of the currents being zero), according to a preferred embodiment the invention can be performed using a conventional three-phase amplifier where a connection to the neutral point is not available. In this way, the invention can be performed in a cost-effective way. In other situations, it may however be considered advantageous to use a system in which two or three of the three phases can be operated independently.

Advantageously, according to a preferred embodiment the invention can be performed by continuously modifying at least one current during movement of at least one translator. As used herein, "continuously" may refer both a stepless and a stepwise modification. The currents may likewise be provided according to a first algorithm in one situation and/or position and may be changed to a different commutation algorithm in at least a second position. The switching may be performed continuously to avoid rapid changes which might contribute to force ripple.

Advantageously, at least one current is controlled in a control system comprising an integrated control method. In this way, only one control system performing several control tasks needs to be provided, which contributes to cost reduction and a more integrated design of the overall system.

According to a preferred embodiment, the method is further adapted to compensate for cogging force. In this way, force ripple may advantageously be further reduced.

The invention can be advantageously implemented in a system wherein one of the at least one stator and the at least one translator comprises the at least one permanent magnet, and the other of the at least one stator and the at least one translator comprises the at least one coil. In other words, the invention may be useful in a system where a segmented stator with coils is provided, as well as in a system comprising a stator with a segmented permanent magnet array or in traditional moving-coil PMLSMs.

A device for performing a corresponding method is also part of the invention. The device comprises a permanent magnet synchronous linear motor comprising at least one segmented stator, at least one translator, at least one coil, and current changing means for changing at least one current of at least one coil during movement of at least one translator, wherein the current changing means are adapted to commute at least one current in at least one position of at least one translator on the basis of an actual electromotive force.

Advantagously, a corresponding device further comprises voltage measuring means to derive an actual electromotive force.

An inventive device or method is advantageously used when a vacuum seal between at least one segmented stator and at least one translator is provided. For such devices, especially high requirements are to be met regarding force homogeneity and any force ripple may be detrimental. The invention is thus especially useful in the treatment of silicon wafers in vacuo.

A method or a device according to the invention is advantageously used for moving a product carrier in a product treatment system, especially in a chemical or physical vapour deposition system. Corresponding applications typically require ultra-precision systems to position respective components, especially in vacuo. By using chemical or physical vapour deposition, single or multi layer, composite, nanostructured, and functionally graded coating materials with well controlled dimension and unique structure at low processing temperatures may be produced. Any force discontinuities that may lead to positioning errors, however, are detrimental for such processing steps. By using the inventive method, such positioning imprecision may be effectively reduced.

An inventive computer program comprising program code means is configured to perform all steps of the inventive method, when the computer program is executed on a computer or a corresponding processing unit, in particular on an inventive apparatus.

An inventive computer program product comprising program code means stored on a computer readable data carrier is provided for performing the inventive method, when the computer program is executed on a computer or a corresponding processing unit, in particular on an inventive apparatus.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings:

Figure 1     shows a schematic side view of a permanent magnet linear synchronous motor with a segmented stator suitable for use with the present invention;

Figure 2    shows a typical waveform of the derivative of the flux linkage in the phases of a stator segment;

Figure 3    shows coil currents commutated according to a preferred embodiment of the invention, which result in a constant thrust force; and

Figure 4    shows forces during commutation between two stator segments of a permanent magnet linear synchronous motor with a segmented stator operated conventionally and according to a preferred embodiment of the invention.

Like parts are indicated with identical reference numbers in the description below for a better understanding of the invention. Furthermore, for the sake of perceptibility of the figures, not all elements therein are designated with reference numbers.

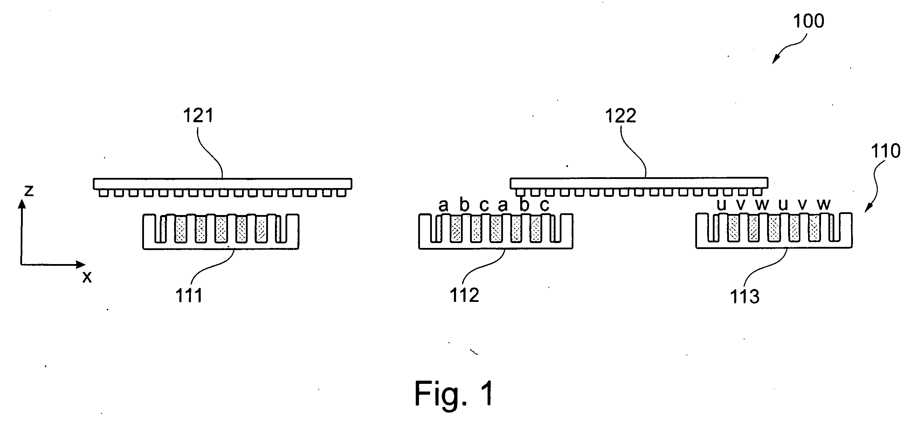

Figure 1 shows a schematic side view of a permanent magnet linear synchronous motor 100 with a segmented stator 110 suitable for use with the present invention. In the figure, the permanent magnet linear synchronous motor 100, or, more precisely, its stator 110, is shown to comprise three stator segments 111, 112, 113 and two translators 121, 122. However, it should be appreciated that the inventive method may be performed with any number of stator segments and may also be useful in a system comprising an unsegmented (continuous) stator, when the problems the invention seeks to solve correspondingly occur. Further, the invention may be used with only one translator or in a system comprising more than one segmented or unsegmented stator, e.g. two stators in parallel which may be synchronously operated. Each stator segment is connected to its own three-phase power supply or amplifier (not shown) delivering a suitable three phase current. The phases of the current are exemplarily denoted a, b, c and u, v, w in segments 112 and 113, respectively, and are not indicated, although analogously present, in segment 111. Segments 111, 112 and 113 are intended to comprise coils suitable to operate a PMLSM. Further, the invention is useful in a motor comprising a moving-coil or in a moving-magnet arrangement, as stated above. In the former arrangement, the coils would be present on the translators while the stator would comprise the permanent magnet.
In figure 1, translator 121 is shown as fully overlapping stator segment 111. This situation will be referred to as "situation A" in the following. In situation A, dq0 decomposition, as explained above and further detailed below, may effectively be used to commutate the motor as translator 121 and stator segment 111 form a balanced system.
Translator 122 is shown as partially overlapping stator segments 112 and 113. This situation will further be referred to as "situation B". It should be understood that situation A refers to any situation and/or position where one or more translators are symmetrically arranged and/or overlapping with respect to a corresponding stator segment or corresponding stator segments, so that a situation results where the components form a system comprising a balanced three-phase situation. Situation B correspondingly shows exemplarily a situation of partial overlap of stator segments 112 and 113 and of translator 122.
In synchronous linear motors, the thrust force F is equal to

$$F = \frac{\mathrm{d}\psi}{\mathrm{d}x}i = k(x)i ,$$

where $\psi$ is the flux linkage of the permanent magnets with the coil and i is the current in the coil. The waveform k(x) can be considered the force function of one coil or phase and can be obtained, for example, from finite element simulation or measurement of the electromotive force e (in Volts) generated by movement of the translator as

$$e = \frac{\mathrm{d}\psi}{\mathrm{d}x}\frac{\mathrm{d}x}{\mathrm{d}t}.$$

When considering only one phase U of a permanent magnet synchronous linear motor, the force is equal to:

$$F_U(x) = \frac{\mathrm{d}\psi_U}{\mathrm{d}x} \cdot i_U(x) ,$$

where $i_U(x)$ is the position dependent current in phase U. The force can be expressed as a function of the EMF, of velocity (dx/dt) and of the current:

$$F_U(x) = e_U(x) \cdot \left(\frac{dx}{dt}\right)^{-1} \cdot i_U(x) = k_U(x) \cdot i_U(x)$$ ,

where $k_u(x)$ is a force function linking the force $F_u(x)$ to the current $i_u(x)$.

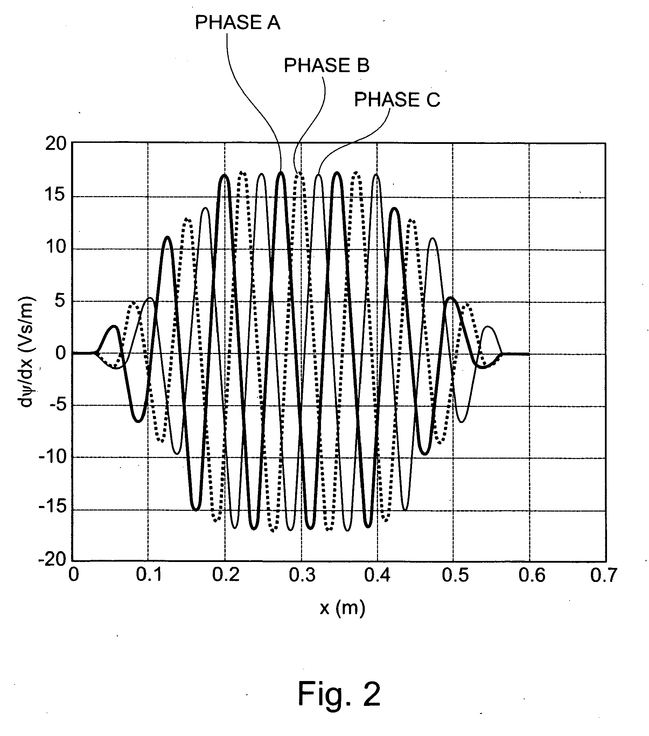

Figure 2 shows the typical waveforms of the functions k(x) for a system as shown in figure 1. It should be appreciated that the areas and/or ranges that will be discussed are dependent of the absolute and/or relative dimensions of the parts of a corresponding permanent magnet linear synchronous motor and that the considerations are given by way of example only. The abscissa of figure 1 may be interpreted as a representation of the longitudinal axis of a corresponding motor, along which a translator is driven. At point 0.3 m, the translator is symmetrically arranged with a corresponding stator (corresponding to situation A of figure 1). From figure 2, it may be seen that only for approximately 0.2 m < x < 0.4 m the position can be considered a balanced three-phase system. In this range, a translator still fully overlaps the corresponding stator segment. The waveforms are periodical, have a constant amplitude and are shifted 120 degrees. Commutation based on dq0 decomposition will therefore result in only minor force ripple, provided that no significant inhomogeneities, e.g. from manufacturing imprecisions, are present. Outside the range 0.2 m < x < 0.4 m, the flux linkage gradually decreases and the system becomes unbalanced. Using dq0 decomposition in this case, significant force ripple will be observed.

Using the finite element method, the induced EMF for a given speed may be calculated. Using this calculation, it can be demonstrated that, when a translator moves away from a corresponding stator segment, the EMF induced in the coils is no longer a balanced three phase voltage. The electromotive force can also be obtained from measurements. Generally, measured and calculated electromotive forces are in good agreement. Accordingly, in the method of the invention, the electromotive forces may either be calculated or measured.

By implementing the inventive commutation algorithm, force ripple can be minimized. The algorithm is based on the abovementioned functions k(x) for each phase of the motor.

Situation B of figure 1 shall now be considered. Here, the translator (corresponding to translator 122 of figure 1) is influenced by forces of two stator segments (stator segments 112 and 113 of figure 1). The force produced by stator segment 112 on translator 122, F2, is given by

$$F_2 = \begin{bmatrix} k_a(x) & k_b(x) & k_c(x) \end{bmatrix} \cdot \begin{bmatrix} i_a & i_b & i_c \end{bmatrix}^T$$ ,

where $i_a$, $i_b$ and $i_c$ are the currents in phases a, b, and c of stator segment 112, respectively.

The force imposed on translator 122 by stator segment 113, $F_3$, is correspondingly given by

$$F_3 = \begin{bmatrix} k_u(x) & k_v(x) & k_w(x) \end{bmatrix} \cdot \begin{bmatrix} i_u & i_v & i_w \end{bmatrix}^T$$ ,

where $i_u$, $i_v$, $i_w$ are the currents in phases u, v, and w of stator segment 113 respectively.

Be it supposed that a force F = $F_2$ + $F_3$ (corresponding to the force resulting from stator segments 112 and 113 of figure 1) acts on the translator. Then

$$F = F_2 + F_3 = \begin{bmatrix} k_a(x) & k_b(x) & k_c(x) & k_u(x) & k_v(x) & k_w(x) \end{bmatrix} \cdot \begin{bmatrix} i_a \\ i_b \\ i_c \\ i_u \\ i_v \\ i_w \end{bmatrix}.$$

When standard three-phase amplifiers are used, where no connection to the neutral point is available, extra constraints need to be added to the equation, i.e. the sum of the currents in each stator segment is equal to zero:

$$\begin{bmatrix} F \\ 0 \\ 0 \end{bmatrix} = \begin{bmatrix} k_a(x) & k_b(x) & k_c(x) & k_u(x) & k_v(x) & k_w(x) \\ 1 & 1 & 1 & 0 & 0 & 0 \\ 0 & 0 & 0 & 1 & 1 & 1 \end{bmatrix} \cdot \begin{bmatrix} i_a \\ i_b \\ i_c \\ i_u \\ i_v \\ i_w \end{bmatrix} = \mathbf{K}(x)\,\vec{i}$$

The coil currents can be obtained by inverting the matrix $\mathbf{K}(x)$. Because $\mathbf{K}(x)$ is underdetermined, there is an infinite set of solutions for the coil currents. An optimal solution is the solution which minimizes the power dissipation in the coils. This solution is the Moore-Penrose inverse of $\mathbf{K}(x)$:

$$\vec{i} = \mathbf{K}^-(x) \begin{bmatrix} F \\ 0 \\ 0 \end{bmatrix} = \mathbf{K}^{\mathrm{T}}(\mathbf{K}\mathbf{K}^{\mathrm{T}})^{-1} \begin{bmatrix} F \\ 0 \\ 0 \end{bmatrix}.$$

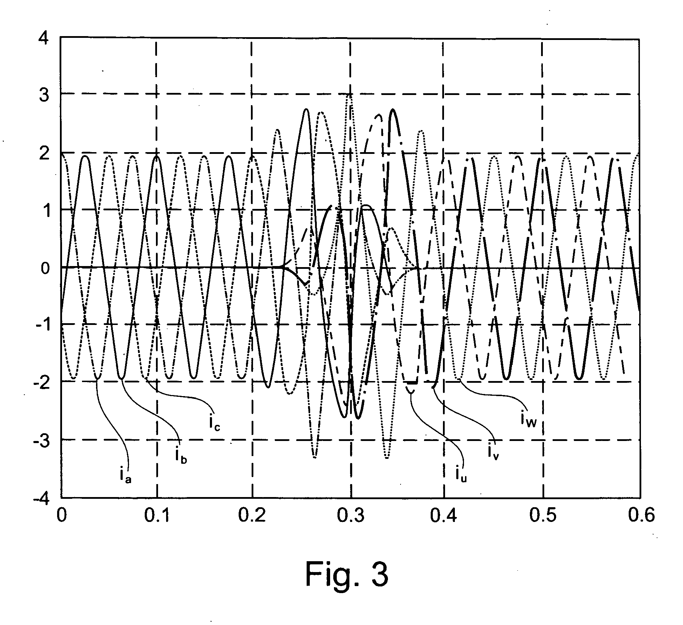

The coil currents resulting in a correspondingly constant force according to a preferred embodiment of the invention are shown in Figure 3. By adapting the currents when a stator segment is partly overlapped or when two segments are overlapped a constant force can be produced and the dissipation can be minimized. When a stator segment is fully overlapped, the algorithm will result in standard three-phase currents which also could have been obtained from commutation based on dq0-decomposition (see above).

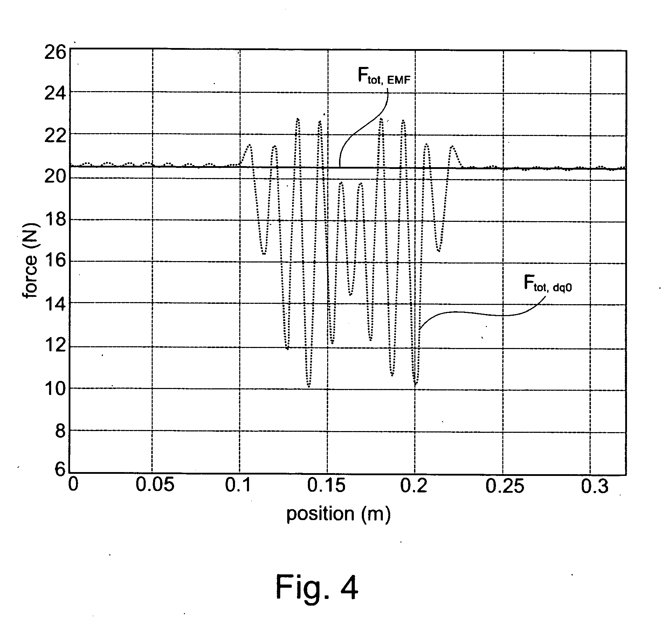

Figure 4 shows forces during commutation between two stator segments at a distance of d = 0.33 m apart obtained from simulation, and shows the advantages achievable with the method of the invention. In figure 4, $F_{tot,\,dq0}$ is the total force when using a conventional dq0-based switching algorithm and $T_{tot,\,EMF}$ is the total force when using the switching algorithm based on the actual electromotive force according to the invention. According to a preferred embodiment of the invention, cogging force generated force variations are also reduced.

The described steps of the method according to the invention may be performed in combination, in different order or alone. Use of the method is not limited to the field of electronic manufacturing and the scope of the invention is only limited by the appended claims.

**Claims**

1. Method for reducing force variations in a permanent magnet synchronous linear motor (100) comprising at least one stator (110), at least one translator (121, 122), and at least one coil, wherein at least one current of at least one coil is adjusted during movement of the at least one translator (121, 122), **characterized in that** in at least one position of the at least one translator (121, 122) at least one current of at least one coil is provided on the basis of an electromotive force.

**2.** Method according to claim 1, wherein the electromotive force is measured or calculated, especially by a finite element method.

**3.** Method according to claim 1 or 2, wherein at least in one further position of the at least one translator (121, 122) at least one further current is provided on the basis of a dq0 algorithm.

**4.** Method according to any one of the preceding claims, wherein at least one current comprises three phases (a, b, c; x, y, z), at least one phase being changed during movement of at least one translator (121, 122).

**5.** Method according to any one of the preceding claims, wherein at least one current is continuously modified during movement of at least one translator (121,122).

**6.** Method according to any one of the preceding claims, wherein at least one current is controlled in a control system comprising an integrated control method.

**7.** Method according to any one of the preceding claims, wherein the method is further adapted to compensate for cogging force.

**8.** Method according to any one of the preceding claims, wherein one of the at least one stator (110) and the at least one translator (121, 122) comprises the at least one permanent magnet, and the other of the at least one stator (110) and the at least one translator (121, 122) comprises the at least one coil.

**9.** Device for performing a method of any one of the preceding claims, comprising a permanent magnet synchronous linear motor (100) comprising at least one segmented stator (110), at least one translator (121, 122), at least one coil, and current changing means for changing at least one current of at least one coil during movement of at least one translator (121, 122), **characterized in that** the current changing means are adapted to commute at least one current in at least one position of at least one translator (121, 122) based on a preferentially processed actual electromotive force.

**10.** Device according to claim 9, further comprising voltage measuring means to derive an electromotive force.

**11.** Method or device according to any one of the preceding claims, wherein a vacuum seal between at least one segmented stator and at least one translator is provided.

**12.** Use of a method or a device according to any one of the preceding claims for moving a product carrier in a product treatment system, especially in a chemical or physical vapor deposition system.

**13.** Computer program comprising program code means for performing all steps of a method according to any one of claims 1 to 8, when the computer program is executed on a computer or a corresponding processing unit.

**14.** Computer program product comprising program code means stored on a computer readable data carrier, for performing all steps of a method according to any one of the claims 1 to 8, when the computer program is executed on a computer or a corresponding processing unit.

EP 2 131 484 A1

Fig. 1

Fig. 2

Fig. 3

Fig. 4

Europäisches
Patentamt
European
Patent Office
Office européen
des brevets

## EUROPEAN SEARCH REPORT

**Application Number**

EP 09 00 5456

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/036330 A1 (ABE NORIYUKI [JP] ET AL) 14 February 2008 (2008-02-14) * paragraphs [0001], [0040], [0140], [0191], [0199], [0206], [0208], [0210] - [0212]; figures 21,24 * ----- | 1-14 | INV. H02P6/00 H01L21/677 H02K41/02 H02K41/03 |
| Y | JP 09 272677 A (MITSUBISHI ELECTRIC CORP) 21 October 1997 (1997-10-21) * abstract; figures 1-8 * ----- | 1-14 | |
| Y | EP 0 848 412 A (APPLIED MATERIALS INC [US]) 17 June 1998 (1998-06-17) * figure 1 * ----- | 11,12 | |
| Y | JP 2003 070226 A (SHINETSU CHEMICAL CO) 7 March 2003 (2003-03-07) * abstract; figures 1-4 * ----- | 1-14 | |
| Y | US 2006/028072 A1 (IWASA TAKAO [JP] ET AL) 9 February 2006 (2006-02-09) * paragraph [0047]; figures 5,8-10 * ----- | 1-14 | TECHNICAL FIELDS SEARCHED (IPC) |
| Y | JP 62 247792 A (TOYOTA MOTOR CORP) 28 October 1987 (1987-10-28) * abstract; figures 1-15 * ----- | 1,9,10, 13,14 | H02P H01L H02K |
| Y | JP 61 164487 A (HITACHI LTD) 25 July 1986 (1986-07-25) * abstract; figures 1-10 * ----- | 1,9,10, 13,14 | |
| A | JP 2004 229396 A (TSUBAKIMOTO CHAIN CO) 12 August 2004 (2004-08-12) * abstract; figure 2 * ----- | 1,9,10, 13,14 | |

The present search report has been drawn up for all claims

| Place of search | Date of completion of the search | Examiner |
|---|---|---|
| Munich | 14 August 2009 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

# EP 2 131 484 A1

## ANNEX TO THE EUROPEAN SEARCH REPORT
## ON EUROPEAN PATENT APPLICATION NO.

EP 09 00 5456

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2009

| Patent document cited in search report | | Publication date | Patent family member(s) | | Publication date |
|---|---|---|---|---|---|
| US 2008036330 | A1 | 14-02-2008 | CA 2659766 A1<br>EP 2015428 A1<br>WO 2008018375 A1<br>JP 2008067592 A<br>KR 20090015950 A | | 14-02-2008<br>14-01-2009<br>14-02-2008<br>21-03-2008<br>12-02-2009 |
| JP 9272677 | A | 21-10-1997 | NONE | | |
| EP 0848412 | A | 17-06-1998 | JP 10214875 A<br>SG 55418 A1<br>TW 406347 B<br>US 5833426 A | | 11-08-1998<br>21-12-1998<br>21-09-2000<br>10-11-1998 |
| JP 2003070226 | A | 07-03-2003 | NONE | | |
| US 2006028072 | A1 | 09-02-2006 | US 2008246351 A1<br>US 2008185982 A1<br>US 2008246352 A1 | | 09-10-2008<br>07-08-2008<br>09-10-2008 |
| JP 62247792 | A | 28-10-1987 | NONE | | |
| JP 61164487 | A | 25-07-1986 | NONE | | |
| JP 2004229396 | A | 12-08-2004 | JP 3816874 B2 | | 30-08-2006 |

EPO FORM P0459

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1024992